Europäisches Patentamt

European Patent Office

Office européen des brevets

(19)

(11) Veröffentlichungsnummer: **0 230 493**
**B1**

# (12) EUROPÄISCHE PATENTSCHRIFT

(45) Veröffentlichungstag der Patentschrift:
28.03.90

(51) Int. Cl.⁴: **B62D 53/08**

(21) Anmeldenummer: **86100883.7**

(22) Anmeldetag: **23.01.86**

(54) Zugsattelzapfen-Aufnahmeteller.

(43) Veröffentlichungstag der Anmeldung:
**05.08.87 Patentblatt 87/32**

(45) Bekanntmachung des Hinweises auf die Patenterteilung:
**28.03.90 Patentblatt 90/13**

(84) Benannte Vertragsstaaten:
**BE CH DE FR GB IT LI NL SE**

(56) Entgegenhaltungen:
**BE-A- 666 382**
**US-A- 2 923 560**
**US-A- 2 958 541**
**US-A- 3 770 296**
**US-A- 3 900 213**

**Prospekt Kopie "+GF+ Verschiebbare
Zugsattelzapfen"**

(73) Patentinhaber: **Jost-Werke GmbH, Siemensstrasse 2,
D-6078 Neu Isenburg(DE)**

(72) Erfinder: **Dreyer, Hans, Wolfgang-Borchert-Strasse 13,
D-6073 Egelsbach-Bayerseich(DE)**

(74) Vertreter: **Köhler, Günter, Dipl.-Ing., Nordring 1,
D-6458 Rodenbach(DE)**

## Beschreibung

Die Erfindung bezieht sich auf einen Zugsattelzapfen-Aufnehmeteller zur Aufnahme eines einen Flansch aufweisenden Zugsattelzapfens in verschiedenen Positionen, die auf einer Längsachse des Aufnahmetellers liegen, mit den verschiedenen Positionen zugeordneten Bohrungen zur Aufnahme von den Flansch mit dem Aufnahmeteller verbindenden Schrauben, wobei der Mittelpunktsabstand benachbarter Sitzflächen des Zugsattelzapfens kleiner als ihr Umkreisdurchmesser ist und die Sitzflächen teilweise von einer Seitenwand eingefaßt sind, die zwischen benachbarten Sitzflächen unterbrochen ist.

Der Zugsattelzapfen (auch "Königszapfen" genannt) ist das Verbindungsglied zwischen einer auf einer Sattelzugmaschine aufgebauten Sattelkupplung und einem Sattelanhänger. Der Zugsattelzapfen wird in einer mit dem Sattelanhänger fest verbundenen Sattelanhängerplatte montiert. Hierbei wird in der Sattelanhängerplatte häufig ein Aufnahmeteller eingeschweißt, in dessen Vertiefung der mit einem Montageflansch versehene Zugsattelzapfen mittels Schrauben befestigt wird. Die zwischen Sattelzugmaschine und Sattelanhänger auftretenden Zug- und Bremskräfte werden hierbei hauptsächlich über die seitlichen Anlageflächen zwischen der Innenseite der Seitenwand der Vertiefung .des Aufnahmetellers und dem Flansch des Zugsattelzapfens formschlüssig übertragen.

Da an eine Sattelzugmaschine häufig verschiedene Sattelanhänger angekuppelt werden müssen, deren Konstruktionsmaße nicht genau an die Sattelzugmaschine angepaßt sind, so daß der Abstand zwischen Zugsattelzapfen und Vorderkante des Sattelanhängers nicht mit dem Freiraum zwischen der eingekuppelten Lage des Zugsattelzapfens in der Sattelkupplung und Aufbauten auf der Sattelzugmaschine übereinstimmt, pflegt man für solche Fälle zwei Aufnahmeteller hintereinander in der Sattelanhängerplatte einzuschweißen und den Zugsattelzapfen entsprechend dem jeweiligen Bedarfsfall in dem einen oder anderen Aufnahmeteller festzuschrauben. Hierbei sind die Abstände zwischen den beiden Positionen des Zugsattelzapfens jedoch verhältnismäßig groß, nämlich mindestens gleich dem Außendurchmesser der Aufnahmeteller.

Um kleinere Abstände zwischen den einzelnen Zugsattelzapfen-Positionen zu erhalten, hat man daher auch schon die benachbarten Randabschnitte der runden Aufnahmeteller in einer vertikalen Ebene abgeflacht, d.h. schmaler ausgebildet, und die Mittelpunkte der Aufnahmeteller näher beieinander angeordnet.

Um die Abstände der einzelnen Zugsattelzapfen-Positionen noch weiter verringern zu können, ist es bei einem gattungsgemäßen Aufnahmeteller gemäß Prospekt «+GF+ Verschiebbare Zugsattelzapfen» bekannt, die Sitzflächen des Zugsattelzapfens am Aufnahmeteller nur durch zwei zu seiner Längsachse parallele Seitenwände einzufassen, zwischen denen der etwa quadratisch geformte Flansch des Zugsattelzapfens in die verschiedenen Positionen verschiebbar ist, so daß sich die benachbarten Sitzflächen überlappen. Hierbei werden die am Zugsattelzapfen wirkenden Zug- und Bremskräfte jedoch ausschließlich über die Befestigungsschrauben, gegebenenfalls nur durch den Reibschluß der Befestigungsschrauben übertragen. Wegen des Vierkantflansches ist der Zugsattelzapfen eine von der Norm (DIN 74080) abweichende Spezialausführung.

Der Erfindung liegt die Aufgabe zugrunde, einen Zugsattelzapfen-Aufnahmeteller der gattungsgemäßen Art anzugeben, der unter Beibehaltung des geringen Abstands der verschiedenen Positionen des Zugsattelzapfens die Schraubverbindung zwischen Zugsattelzapfen und Aufnahmeteller von Zug- und Bremskräften entlastet.

Erfindungsgemäß ist diese Aufgabe dadurch gelöst, daß die Innenseitenabschnitte der Seitenwand jeder Sitzfläche, die sich beiderseits einer quer zur Längsachse des Aufnahmetellers durch den Mittelpunkt der Sitzfläche verlaufenden Querachse erstrecken, einander bis auf einen vorbestimmten Abstand in dem Grenzbereich der benachbarten Sitzflächen annähern.

Bei dieser Lösung nehmen die Innenseitenabschnitte der Seitenwand der jeweils vom Zugsattelzapfen eingenommenen Sitzfläche zumindest einen erheblichen Teil der Zug- und Bremskräfte auf, so daß die Schraubverbindung zwischen Zugsattelzapfenflansch und Aufnahmeteller von diesen Kräften weitgehend entlastet ist.

Ferner kann dafür gesorgt sein, daß die Innenseite der Seitenwand jeder Sitzfläche sich über einen Kreisbogen beiderseits der Querachse erstreckt. Bei dieser Ausbildung kann ein genormter Zugsattelzapfen mit kreisförmigem Flansch verwendet werden.

Vorzugsweise erstrecken sich die Innenseiten der Seitenwände benachbarter Sitzflächen bis zu einer gemeinsamen Kante. Hierbei bieten die Innenseitenabschnitte der Seitenwand die größtmögliche Widerlagerfläche für den Flansch des Zugsattelzapfens in Richtung der Längsachse des Aufnahmetellers.

Die Erfindung und ihre Weiterbildungen werden nachstehend anhand der Zeichnung eines bevorzugten Ausführungsbeispiels näher beschrieben. Es zeigen:

Fig. 1 eine Unteransicht einer Sattelanhängerplatte mit angeschweißtem Aufnahmeteller und einem in dem Aufnahmeteller festgeschraubten Zugsattelzapfen und

Fig. 2 einen Längsschnitt durch einen Teil der Baueinheit nach Fig. 1.

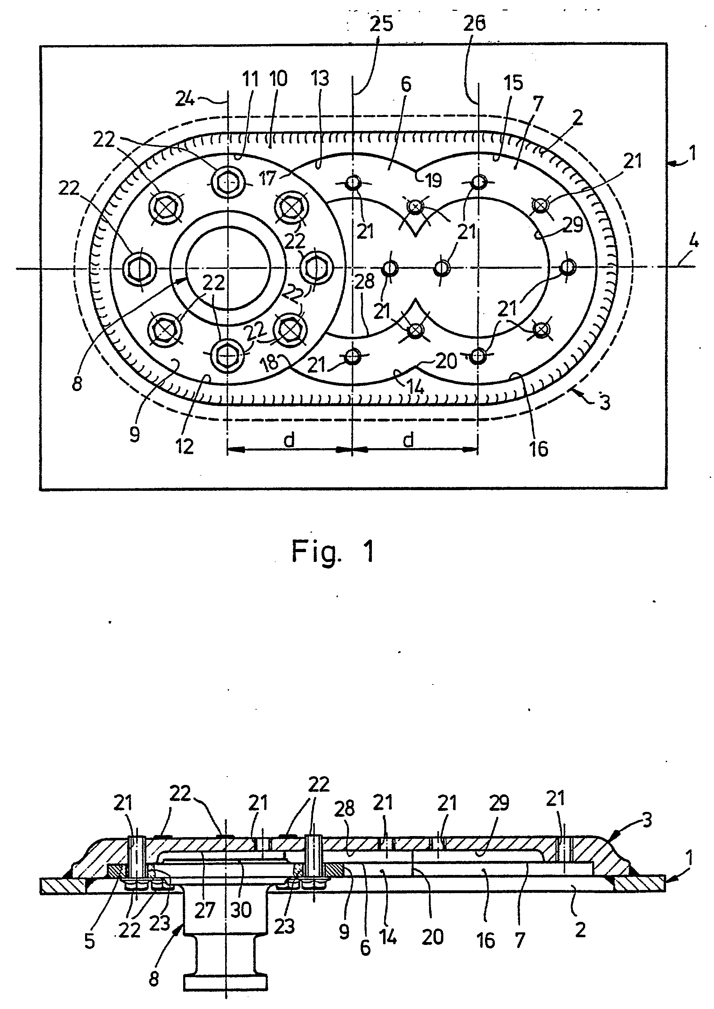

Bei der in den Fig. 1 und 2 dargestellten Baueinheit ist an einer Sattelanhängerplatte 1 mit einer ovalen Öffnung 2 ein Aufnahmeteller 3 mit einer der Öffnung 2 entsprechenden, jedoch etwas größeren ovalen Kontur am Rande der Öffnung 2 angeschweißt.

Der Aufnahmeteller 3 hat auf seiner Unterseite eine Vertiefung mit drei in gleichen Mittelpunktsabständen d auf einer Längsachse 4 des Aufnahmetellers 3 einander überlappend ausgebildeten Sitzflächen 5, 6 und 7 für einen Zugsattelzapfen 8 mit kreisförmigem Flansch 9. Die Seitenwand 10 der Vertiefung hat auf Kreisbögen liegende Innenseitenabschnitte 11 bis 16, die die Sitzflächen 5, 6 und 7 teilweise begrenzen und sich beiderseits einer quer zur Längsachse 4 des Aufnahmetellers 3 durch den Mittelpunkt der jeweiligen Sitzfläche verlaufenden Querachse 17, 18 und 19 erstrecken. Die sich in bezug auf die Längsachse 4 gegenüberliegenden Innenseitenabschnitte 11, 12 bzw. 13, 14 und 15, 16 nähern sich einander bis auf einen vorbestimmten Abstand soweit an, daß sich die Innenseiten 11, 12 bzw. 13, 14 und 15, 16 der Seitenwandabschnitte benachbarter Sitzflächen 5, 6 bzw. 6, 7 bis zu einer gemeinsamen Kante 17, 18, 19 bzw. 20 erstrecken. Die Innenseitenabschnitte 11 und 12 bzw. 15 und 16 der beiden äußeren Sitzflächen 5 und 7 gehen ineinander über. Die Mittelpunktabstände d sind kleiner als die untereinander gleich großen Umkreisdurchmesser der Sitzflächen 5, 6 und 7.

Jede Sitzfläche 5, 6 und 7 ist ferner mit Gewinde aufweisenden, in gleichen Winkelabständen auf einem Umkreis liegenden Bohrungen 21 versehen. In diese Bohrungen 21 können Schrauben 22 eingeschraubt werden, die im Flansch 9 des Zugsattelzapfens 8 auf einem Umkreis mit dem gleichen Durchmesser wie der Umkreis der Bohrungen 21 und in gleichen Winkelabständen ausgebildete Bohrungen 23 durchsetzen. Der Außendurchmesser des Flansches 9 ist gleich dem Umkreisdurchmesser der zumindest teilweise kreisförmigen Sitzflächen 5, 6 und 7, so daß der Flansch 9 in jeder der drei durch die Sitzflächen 5 bis 7 bestimmten Positionen durch die an ihm anliegenden Innenseitenabschnitte 11, 12 bzw. 13, 14 bzw. 15, 16 in Richtung der Längsachse 4 formschlüssig abgestützt wird, da sich die Seitenwandabschnitte 11 bis 16 jeweils zu beiden Seiten von Querachsen 24, 25 und 26 erstrecken, die quer zur Längsachse 4 verlaufen und diese im Mittelpunkt der jeweiligen Sitzfläche 5, 6 und 7 kreuzen. Durch diese formschlüssige Abstützung des Zugsattelzapfens 8 an seinem Flansch 9 werden die Verbindungsschrauben 22 gegenüber Zug- und Bremskräften der Sattelzugmaschine bzw. des Sattelanhängers entlastet.

In den Sitzflächen 5, 6 und 7 sind weitere Vertiefungen 27, 28, und 29 ausgebildet, in die der Flansch 9 des Zugsattelzapfens 8 in seiner jeweiligen Position mit einem zylindrischen Vorsprung 30 eingreift. Diese Vertiefungen 27, 28 und 29 können auch weggelassen werden, wenn der Flansch 9 keinen derartigen Vorsprung 30 aufweist, so daß die Sitzflächen 5, 6 und 7 ebene, sich überlappende Kreisflächen bilden.

Eine Abwandlung des beschriebenen Ausführungsbeispiels kann darin bestehen, daß zwei oder mehr als drei Sitzflächen entsprechend der gewünschten Anzahl der Positionen des Zugsattelzapfens vorgesehen sind.

Eine weitere Abwandlung kann darin bestehen, daß der Flansch des Zugsattelzapfens als Vieleck mit wenigstens sechs Ecken und die Form der Innenseitenabschnitte 11 bis 16 ebenfalls entsprechend vieleckig ausgebildet ist, wobei auch in diesem Falle die Mittelpunktsabstände d der Vielecke kleiner als ihr Umkreisdurchmesser gewählt sind.

## Patentansprüche

1. Zugsattelzapfen-Aufnahmeteller (3) zur Aufnahme eines einen Flansch (9) aufweisenden Zugsattelzapfens (8) in verschiedenen Positionen, die auf einer Längsachse (4) des Aufnahmetellers (3) liegen, mit den verschiedenen Positionen zugeordneten Bohrungen (21) zur Aufnahme von den Flansch (9) mit dem Aufnahmeteller (3) verbindenden Schrauben (22), wobei der Mittelpunktsabstand (d) benachbarter Sitzflächen (5, 6; 6,7) des Zugsattelzapfens (8) kleiner als ihr Umkreisdurchmesser ist und die Sitzflächen (5, 6, 7) teilweise von einer Seitenwand (10) eingefaßt sind, die zwischen benachbarten Sitzflächen unterbrochen ist, **dadurch gekennzeichnet,** daß Innenseitenabschnitte (11 - 16) der Seitenwand jeder Sitzfläche (5; 6; 7), die sich beiderseits einer quer zur Längsachse (4) des Aufnahmetellers (3) durch den Mittelpunkt der Sitzfläche (5; 6; 7) verlaufenden Querachse (24; 25; 26) erstrecken, einander bis auf einen vorbestimmten Abstand in dem Grenzbereich der benachbarten Sitzflächen (5, 6; 6, 7) annähern.

2. Aufnahmeteller nach Anspruch 1, **dadurch gekennzeichnet,** daß die Innenseite (11, 12; 13, 14; 15, 16) der Seitenwand jeder Sitzfläche (5; 6; 7) sich über einen Kreisbogen beiderseits der Querachse (24; 25; 26) erstreckt.

3. Aufnahmeteller nach Anspruch 1 oder 2, **dadurch gekennzeichnet,** daß sich die Innenseiten (11, 12; 13, 14; 15, 16) der Seitenwände benachbarter Sitzflächen (5, 6; 6, 7) bis zu einer gemeinsamen Kante (17; 18; 19; 20) erstrecken.

## Claims

1. Semitrailer traction spigot receptacle plate (3) for the reception of a semitrailer traction spigot (8), which displays a flange (9), in different positions which lie on a longitudinal axis (4) of the receptacle plate (3), with bores (21), which are associated with the different positions, for the reception of screws (22) connecting the flange (9) with the receptacle plate (3), wherein the centre pitch spacing (d) of neighbouring seating surfaces (5, 6; 6, 7) of the semitrailer traction spigot (8) is smaller than their circumferential diameter and the seating surfaces (5, 6, 7) are partially framed by a side wall (10), which is interrupted between neighbouring seating surfaces, characterised thereby, that the inward side portions (11 to 16) of the side wall of each seating surface (5, 6, 7), which extend at both sides of a transverse axis (24, 25; 26) extending through the centre of the seating surface (5, 6, 7) and transversely to the longitudinal axis (4) of the receptacle plate (3), approach one the other to a predetermined spacing in the boundary region of the neighbouring seating surfaces (5, 6; 6, 7).

2. Receptacle plate according to claim 1, characterised thereby, that the inward side (11, 12; 13, 14;

15, 16) of the side wall of each seating surface (5, 6, 7) extends over a circular arc at both sides of the transverse axis (24; 25; 26).

3. Receptacle plate according to claim 1 or 2, characterised thereby, that the inward sides (11, 12; 13, 14; 15, 16) of the side walls of neighbouring seating surfaces (5, 6; 6, 7) extend to a common edge (17; 18; 19; 20).

## Revendications

1. Plateau de montage pour pivot d'accouplement pour semi-remorque (3) destiné à recevoir un pivot d'accouplement pour semi-remorque (8) pourvu d'un flasque (9) dans différentes positions, qui sont situés sur un axe longitudinal (4) du plateau de montage (3) avec des alésages (21) correspondant aux différentes positions, destiné à recevoir les vis 22 assemblant le flasque (9) au plateau de montage (3) tandis que la distance des centres (d) des surfaces d'appui voisines (5, 6; 6, 7) du pivot d'accouplement pour semi-remorque (8) est plus petite que leur diamètre de périphérie et que les surfaces d'appui (5, 6, 7) sont entourées partiellement par une paroi latérale (10) qui est interrompue entre deux surfaces d'appui voisines, caractérisé en ce que les sections latérales intérieures (11, 16) de la paroi latérale de chaque surface d'appui (5, 6, 7) qui s'étendent de part et d'autre d'un axe transversal (24, 25, 26) passant par le centre des surfaces d'appui (5, 6, 7) et transversalement par rapport à l'axe longitudinal (4) du plateau de montage (3) se rapprochent l'une de l'autre jusqu'à une distance prédéterminée dans la zone limite des surfaces d'appui voisines (5, 6; 6, 7).

2. Plateau de montage selon la revendication 1, caractérisé en ce que la face intérieure (11, 12; 13, 14; 15, 16) de la paroi latérale de chaque surface d'appui (5, 6, 7) s'étend sur un arc de cercle de part et d'autre de l'axe transversal (24, 25, 26).

3. Plateau de montage selon la revendication 1 ou 2, caractérisé en ce que les faces intérieures (11, 12; 13, 14; 15, 16) des parois latérales des surfaces d'appui voisines (5, 6; 6, 7) s'étendent jusqu'à un bord commun (17; 18; 19; 20).

Fig. 1

Fig. 2